# EUROPEAN PATENT SPECIFICATION

(11) **EP 4 166 433 B1**
(45) Date of publication and mention of the grant of the patent: **16.07.2025**
(21) Application number: 21382939.3
(22) Date of filing: 18.10.2021
(51) Int. Cl.: B62H 3/00

(54) **METHOD FOR MONITORING AN AUTOMATIC PARKING SYSTEM FOR STORING A BICYCLE**
VERFAHREN ZUR ÜBERWACHUNG EINES AUTOMATISCHEN PARKSYSTEMS ZUM ABSTELLEN EINES FAHRRADS
PROCÉDÉ DE SURVEILLANCE D'UN SYSTÈME DE STATIONNEMENT AUTOMATIQUE POUR LE STOCKAGE D'UNE BICYCLETTE

(43) Date of publication of application: 19.04.2023
(73) Proprietor: IGNASI CLOTET S.L.U., 25230 Mollerussa (ES)
(72) Inventor: Caba Muntada, Joan, 25230 Mollerussa (ES); Miró Nabau, Jaume, 25230 Mollerussa (ES)
(74) Representative: Curell Suñol S.L.P.

(56) References cited:
- WO-A1-2015/162310
- CN-A- 112 196 326
- CN-U- 212 927 219
- US-A1- 2020 080 333
- MING-YEE CHIU ET AL: "An embedded real-time vision system for 24-hour indoor/outdoor car-counting applications", 18TH INTERNATIONAL CONFERENCE ON PATTERN RECOGNITION (ICPR'06), vol. 3, 1 January 2004 (2004-01-01), US, pages 338, XP055900205, ISSN: 1051-4651, Retrieved from the Internet <URL:https://ieeexplore.ieee.org/stampPDF/getPDF.jsp?tp=&arnumber=1334536&ref=aHR0cHM6Ly9pZWVleHBsb3JlLmllZWUub3JnL2RvY3VtZW50LzEzMzQ1MzY=> DOI: 10.1109/ICPR.2004.1334536

## Description

### Field of the invention

The invention relates to a method for monitoring an automatic parking system for storing a bicycle, said parking system comprising: a delivery enclosure, comprising an access opening and closing means, said delivery enclosure being accessible by a parking system user through said access opening, to deliver said bicycle, and said closing means being movable between an open position and a closed position to close said access opening, a storage area, in communication with said delivery enclosure for storing said bicycle, a handling device located inside said delivery enclosure for receiving and transferring said bicycle from said delivery enclosure to the storage area, at least one image data obtention device, for obtaining monitoring image data of the content of said delivery enclosure , and at least one data processing device functionally associated to said at least one image data obtention device for analysing said monitoring image data, to said handling device and to said closing means.

### State of the art

In the recent years due to environmental reasons and for sake of sustainability two-wheeled transport such as with bicycles and scooters has become more and more popular in the world and has experienced an exponential growth. Both conventional bicycles as well as scooters, but also their electrified versions are more and more used in the cities as an alternative to private cars or public transport. Also, public transport in combination with bicycles and scooters is more and more an option for long distance displacements.

In this context, parking systems allowing to store bicycles, scooters, and in general any type of bicycle are becoming more present in cities around the world. These parking systems can be automatic storage facilities located in public areas that allow to store many bicycles. These facilities comprise an automatic collection and delivery system of the bicycle that avoids the need of human supervision and thus simplifies the parking process for the end user.

However, these automated parking systems represent a source of potential hazards as they are often located in public areas. One of the major concerns are the safety issues with the automated delivery and collection system when they are installed in an urban environment, particularly in crowded areas, areas with children such as schools, playgrounds or the like, or areas with high concentration of pets or the like. Besides the safety of the public in general, the user is also exposed to the risk of suffering injuries due to the moving parts of such automated parking systems.

A widespread solution to improve the safety around the collection and delivery area of automated parking systems is the use of an enclosure surrounding said collection and delivery device. This enclosure opens to allow a user to place the bicycle in the collection and delivery device and closes before the vehicle starts being transported towards the storage area, thus limiting the risk of accidents during the automated transport operation. While such enclosures add a layer of protection around the collection and delivery device, some problems remain. There is a serious risk of a user, or a person in general getting trapped in the enclosure or a passing pedestrian or animal entering said enclosure while doors are closing.

In addition, since such parking systems are meant to operate in an automatic manner, it is important to ensure the integrity of the equipment itself against user missuses. Attempts from users to park vehicles that the equipment cannot handle, as well as to users inadvertently leaving on the vehicle accessories or personal belongings that might be carried together with the bicycle into the storage facility and be lost, can damage or block the mechanics of the parking system.

CN212927219U discloses a stereo garage for shared bicycles, and a method for monitoring an automatic parking system for storing a bicycle, in accordance with the preamble of claim 1.

CN112196326A discloses an automatic storing and taking underground garage for public bicycles.

### Summary of the invention

It is thus an object of the invention to propose a method for monitoring an automatic parking system for storing a bicycle which improves the security of use both for the users, as well as for the own parking system. This purpose is achieved by a method of the type indicated at the beginning, wherein said method comprises the steps of:
[f] obtaining monitoring image data of the content of said delivery enclosure with said at least one image data obtention device and sending said monitoring image data to said at least one data processing device,
[g] automatically comparing said monitoring image data with a preestablished bicycle pattern by means of said data processing device to assess the content of said delivery enclosure, and
[h] taking an operation decision of said parking system basing on said comparison step. The monitoring image data provides enough information for the system to decide how to proceed to improve the security of use. There are different situations regarding the monitorization.

It can happen, that the user places a bicycle, e.g., a bicycle, which is larger than the sizes accepted by the system. In this case, the comparison can show that indeed, in the enclosure there is a bicycle, but that this bicycle cannot be stored in the parking system.

Another situation would be that the user has left objects on the bicycle such as bags hanging from the handlebar which could be block the handling device or the storage area. Again, the comparison with the recognition pattern will prevent this situation to cause any harm.

Another possibility is that a person remains inside the enclosure. This is a situation of high risk that must be avoided. Again, the recognition pattern will show that further to the bicycle there is a person. Then the person can be warned to leave the delivery enclosure before the storage of the bicycle can take place.

Finally, another situation could also happen which is that the user has left the delivery enclosure, and that the storage can take place. However, short before the storage takes place, e.g., a pet has entered the delivery enclosure. Again, this situation must be avoided, by means of the image recognition.

The invention further includes a number of preferred features that are object of the dependent claims and the utility of which will be highlighted hereinafter in the detailed description of an embodiment of the invention.

According to the invention, said operation decision comprises the steps of:
[j] with said closing means being in open position, moving said closing means into said closed position only when said at least one data processing device confirms a first state of conformity in which
   [j-i] the content of said delivery enclosure is a bicycle,
   [j-ii] said bicycle is storable in said parking system, and
   [j-iii] no living being is in said delivery enclosure, and
   once said closing means are in closed position,
[k] repeating the steps of:
   [f] obtaining monitoring image data of the content of said delivery enclosure and
   [g] automatically comparing said monitoring image data with said preestablished bicycle pattern, to obtain a second state of conformity, and
[I] comparing said first and second states of conformity with said at least one data processing device such that,
   [I-i] if said first and second states of conformity are the same, said handling device is actuated to transfer said bicycle to said storage area, and
   [I-ii] if said second state of conformity differs from said first state of conformity, taking a correction operation decision.

Especially preferably said parking system comprises a user confirmation device functionally associated with said data processing device, the method further comprising a user confirmation step with said user confirmation device, said user confirmation step taking place before obtaining monitoring image data of the content of said delivery enclosure.

In order to obtain a more accurate decision basis said monitoring image data of the content of said delivery enclosure comprises at least one among: size, shape, morphology, colour, temperature, volume or combinations thereof. These group of data increase the precision on the recognition of the bicycle placed in the delivery enclosure.

In another embodiment said at least one image data obtention device is one among the group consisting of a thermographic camera, a 3D camera and a visible light camera or combinations thereof.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 is diagram of the method for monitoring an automatic parking system according to the invention.
Figure 2 is diagram of a preferred method for monitoring an automatic parking system according to the invention.
Figure 3 shows a schematical elevation view of the automatic parking system of the invention.
Figure 4 shows a schematical isometric view of the delivery enclosure of the parking system of the invention when a user is inside the delivery enclosure .
Figure 5 shows a schematical isometric view of the delivery enclosure of the parking system of the invention once the user is outside the delivery enclosure .
Figure 6 shows a top view of the delivery enclosure of the parking system of the invention.

### Detailed description of embodiments of the invention

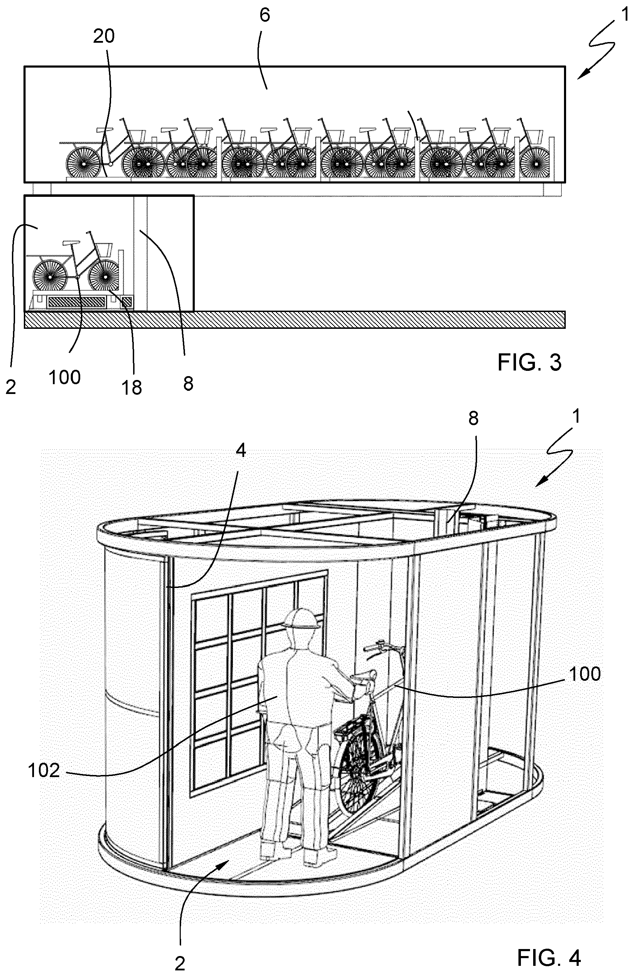

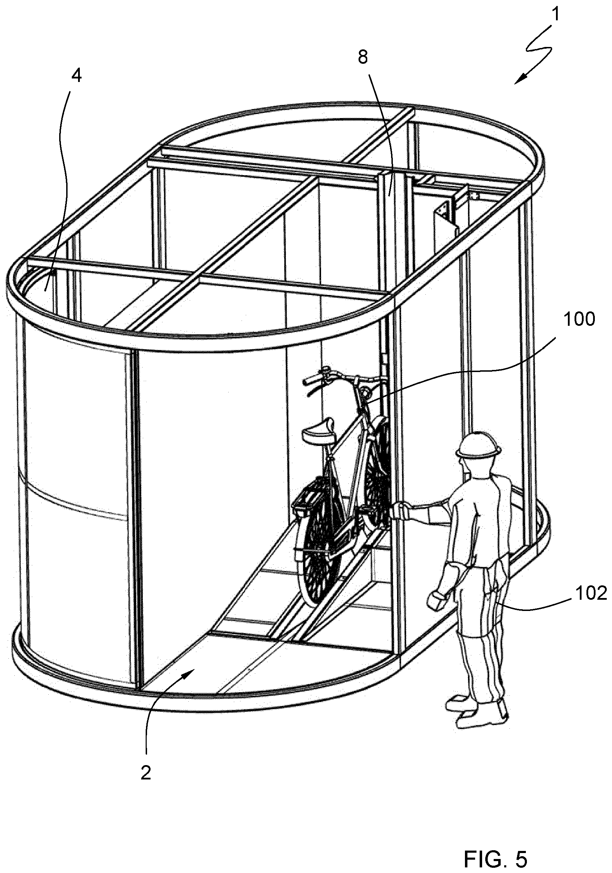

Figures 3 to 6 of an automatic parking system 1 for storing a bicycle 100, according to the invention.

As it is apparent from Figure, the parking system 1 comprises a delivery enclosure 2 which is closed. This delivery enclosure 2 comprises an access opening and closing means 4.

The delivery enclosure 2 is accessible by a parking system user 100 through the access opening. The user 100 can walk in the delivery enclosure 2 together with the bicycle 100, for delivering it in the parking system for storage.

The closing means 4 in the form of an arch shaped gate are arranged to close the access opening. This closing means 4 are movable between an open position, shown in figures 4 to 6 and a closed position (not shown) to close access opening.

In the parking shown in Figure 3, there is further provided a storage area 6 for storing a plurality of bicycles 100, which in this embodiment is arranged above the delivery enclosure 2. The storage area 6 and the delivery enclosure 2 are in physical communication, for storing the bicycle 100 delivered at the delivery enclosure 2.

Further, a handling device 8 is located inside the delivery enclosure 2 for receiving and transferring the bicycle 100 from the delivery enclosure 2 to the storage area 6. In this case, the handling device is a lifting rail with a gripper movable from the ground level 18 of the delivery enclosure 2 to the storage level 20 of the storage area 6.

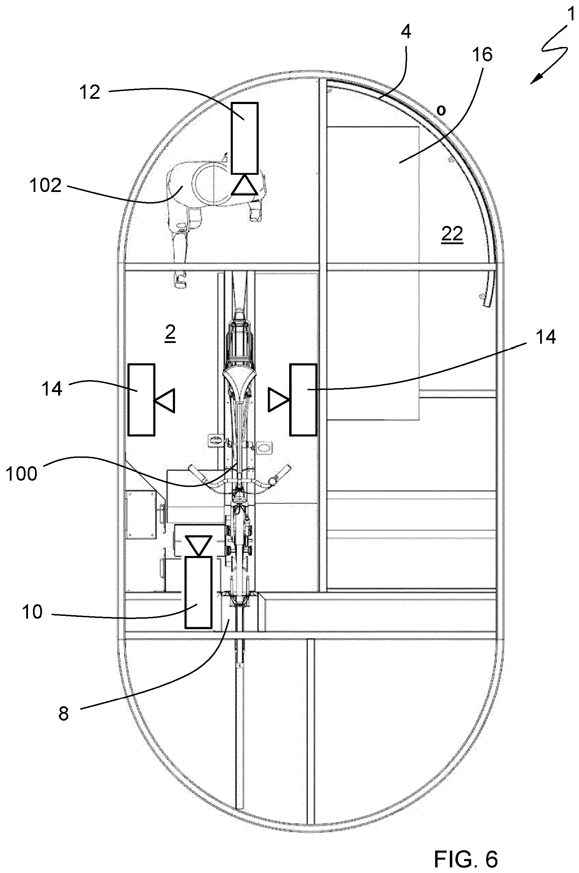

The parking system 1 of this embodiment further comprises four image data obtention devices 10, 12, 14, for obtaining monitoring image data of the content of the delivery enclosure 2. In this case, and referring to Figure 6, to the sides of the bicycle 100 there are provided two visible light cameras 14 for obtaining photographs of the bicycle 100. In front of the bicycle 100 there is provided a thermographic camera 10 to obtain temperature information of the content and finally, to the back of the bicycle 100 there is provided a 3D camera 12 for obtention of volume information of the content of the delivery enclosure 2.

Finally, in a room 22 adjacent to the delivery enclosure 2 is arranged a central data processing device 16, such as a computer or similar. This data processing device is functionally associated to the image data obtention devices 10, 12, 14 for analysing the monitoring image data obtained. This data processing device 16 is further functionally associated to the handling device 8 and to the closing means 4.

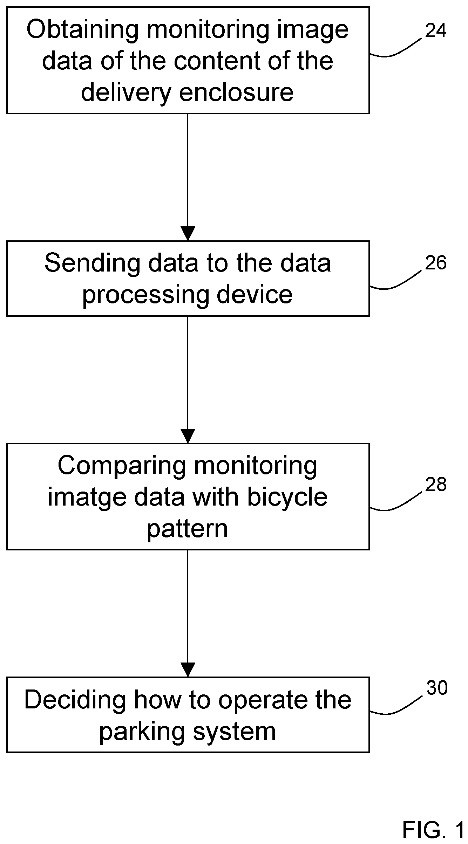

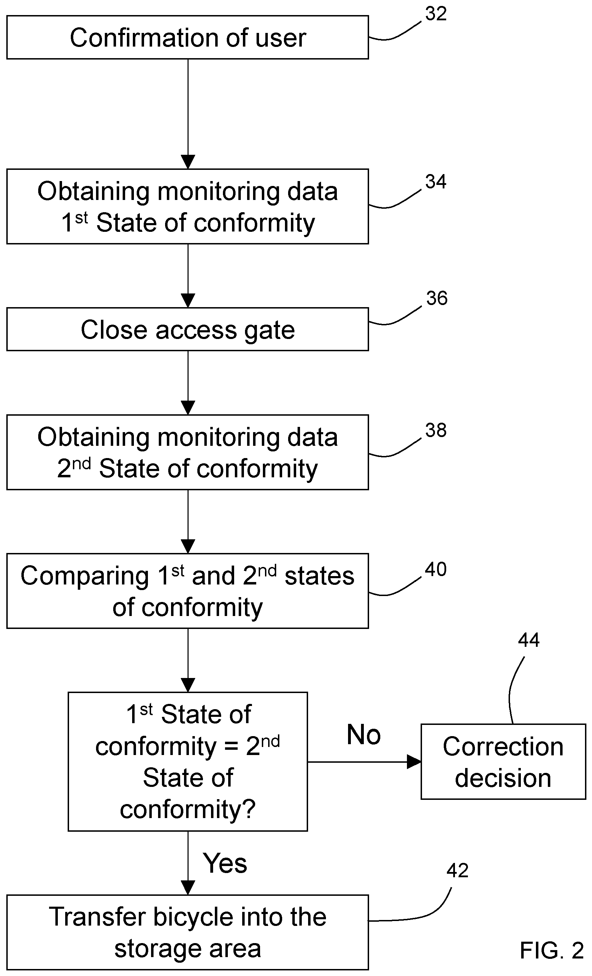

Below the method of the invention is explained basing on Figures 1 and 2.

In its more general form, shown in Figure 1 the method comprises the steps of: obtaining monitoring image data 22 of the content of the delivery enclosure 2 with the four image data obtention devices 10, 12, 14.

The images obtained, that is thermographic images, photographs and volumetric images, are then sent 26 to the data processing device 16.

In the data processing device 16, the images are automatically compared in a comparison step 28 with a preestablished bicycle pattern by means of the data processing device 16. This bicycle pattern can consist in a plurality of images of bicycles of different sizes and shapes providing the system with the relevant information to know that the vehicle in the enclosure is indeed a bicycle, and not a tricycle, a motorbike of some other vehicle no suitable for the parking system 1.

This comparison step 28 allows assessing the content of the delivery enclosure 2. In this case, the 3D camera 12 allows knowing the size of the bicycle, while the thermographic camera 10 us used to differentiate the user from the bicycle. Finally, the cameras 14 provide information of the morphology of the bicycle 100. Indeed, the monitoring image data of the content of said delivery enclosure 2 can comprises at least one among: size, shape, morphology, colour, temperature, volume or combinations thereof.

Finally, all this information allows taking an operation decision step 30 of the parking system 1 basing on said comparison step 28.

This decision can vary between starting the parking system storing procedure, closing the system, triggering alarms, informing a central control station of the like.

Below it is further explained in detail how the security of use is enhanced.

As it was explained before, one of the biggest problems of an automated parking system is either that a user, a pet or a child remains closed inside the delivery enclosure 2 or that a bicycle 100 is placed in the delivery enclosure for storing, having a larger size than the size which the system 1 can handle. This can lead to damages of the system as well personal and material damages for the user or the bicycle 2.

In order to solve this problem, it is preferred that the parking system 1 comprises a user confirmation device functionally associated with the data processing device 16. For example, the user confirmation device can be an ID card reader outside the enclosure. However, especially preferably, the user confirmation device will be an application installed in a mobile phone functionally connected to the data processing device 16, allowing the user to communicate with this latter for confirming his identity, and that the storing process can start.

As it is shown in Figure 2, the method further comprises a user 102 confirmation step 32 with the user confirmation device. The user confirmation step 32 taking place before obtaining monitoring image data of the content of the delivery enclosure 2.

In practice, the user 102 delivers the bicycle in the gripper of the lifting mechanism at delivery enclosure 2 and exits the delivery enclosure 2.

Once the user 102 is outside the parking system 1 then he can carry out the confirmation step.

When doing this confirmation, the cameras 10, 12, 14 carry out a step of obtaining monitoring image data 34

The operation decision according to the method of the invention comprises the steps of with said closing means 4 being in open position, moving said closing means 4 into said closed position 36 only when said at least one data processing device 16 confirms a first state of conformity 34 in which
[j-i] the content of said delivery enclosure 2 is a bicycle 100,
[j-ii] the bicycle 100 is storable in the parking system 1 because it has the size and geometry suitable for the system, and
[j-iii] no living being 102 is in said delivery enclosure 2.

Once the closing means 4 are in closed position, it must be reassured that nobody has entered the delivery enclosure 2 while the gate was closing.

To this end, the previous steps are repeated as follows: obtaining monitoring image data 38 of the content of the delivery enclosure 2 and automatically comparing the monitoring image data with the preestablished bicycle pattern, to obtain a second state of conformity.

Finally, to reassure that the storing process can start, there is a comparing step 40 for comparing the first and second states of conformity with the data processing device 16.

In this comparison if the first and second states of conformity are the same, that is nobody has entered the delivery enclosure 2 or not foreign object has been placed therein while the gate was closing, the handling device 8 is actuated to transfer 42 the bicycle 100 to the storage area 6.

On the contrary, if the processing device 16 finds differences between the first and second states of conformity, because somebody has entered the delivery enclosure 2 o has thrown some foreign object, a correction operation decision 44 is taken, such as opening the gate, triggering an alarm, sending malfunction information to a control center, or the like.

In this way it can be assured that the security of use is enhanced.

## Claims

1. A method for monitoring an automatic parking system (1) for storing a bicycle (100), said parking system (1) comprising:
[a] a delivery enclosure (2), comprising an access opening and closing means (4), said delivery enclosure (2) being accessible by a parking system user (100) through said access opening, to deliver said bicycle (100), and said closing means (4) being movable between an open position and a closed position to close said access opening,
[b] a storage area (6), in communication with said delivery enclosure (2) for storing said bicycle (100),
[c] a handling device (8) located inside said delivery enclosure (2) for receiving and transferring said bicycle (100) from said delivery enclosure (2) to said storage area (6),
[d] at least one image data obtention device (10, 12, 14), for obtaining monitoring image data of the content of said delivery enclosure (2), and
[e] at least one data processing device (16) functionally associated to said at least one image data obtention device for analysing said monitoring image data, to said handling device (8) and to said closing means (4),
said method further comprising the steps of:
[f] obtaining monitoring image data of the content of said delivery enclosure (2) with said at least one image data obtention device (10, 12, 14) and sending said monitoring image data to said at least one data processing device (16),
[g] automatically comparing said monitoring image data with a preestablished bicycle pattern by means of said data processing device (16) to assess the content of said delivery enclosure (2), and
[h] taking an operation decision of said parking system (1) basing on said comparison step,
**characterized in that** said operation decision comprises the steps of:
[j] with said closing means (4) being in open position, moving said closing means (4) into said closed position only when said at least one data processing device (16) confirms a first state of conformity in which
[j-i] the content of said delivery enclosure (2) comprises a bicycle (100),
[j-ii] said bicycle (100) is storable in said parking system (1), and
[j-iii] no living being (102) is in said delivery enclosure (2), and
once said closing means (4) are in closed position,
[k] repeating the steps of:
[f] obtaining monitoring image data of the content of said delivery enclosure (2) and
[g] automatically comparing said monitoring image data with said preestablished bicycle pattern, to obtain a second state of conformity, and
[I] comparing said first and second states of conformity with said at least one data processing device (16) such that,
[I-i] if said first and second states of conformity are the same, said handling device (8) is actuated to transfer said bicycle (100) to said storage area (6), and
[I-ii] if said second state of conformity differs from said first state of conformity, taking a correction operation decision.

2. The method according to claim 1, **characterized in that** said parking system (1) comprises a user confirmation device functionally associated with said data processing device (16), the method further comprising a user confirmation step with said user confirmation device, said user confirmation step taking place before obtaining monitoring image data of the content of said delivery enclosure (2).

3. The method according to any one of claims 1 or 2, **characterized in that** said monitoring image data of the content of said delivery enclosure (2) comprises at least one among: size, shape, morphology, colour, temperature, volume or combinations thereof.

4. The method according to any one of claims 1 to 3, **characterized in that** said at least one image data obtention device (10, 12, 14) is one among the group consisting of a thermographic camera, a 3D camera and a visible light camera or combinations thereof.

## Patentansprüche

1. Verfahren zur Überwachung eines automatischen Parksystems (1) zum Abstellen eines Fahrrads (100), wobei das Parksystem (1) aufweist:
[a] ein Auslieferungsgehäuse (2), umfassend eine Zugangsöffnung und eine Schließeinrichtung (4), wobei das Auslieferungsgehäuse (2) durch einen Parksystembenutzer (100) durch die Zugangsöffnung zugänglich ist, um das Fahrrad (100) auszuliefern, und wobei die Schließeinrichtung (4) zwischen einer offenen Position und einer geschlossenen Position beweglich sind, um die Zugangsöffnung zu schließen,
[b] einen Lagerbereich (6), der mit dem Auslieferungsgehäuse (2) in Verbindung steht, um das Fahrrad (100) zu lagern,
[c] eine Handhabungsvorrichtung (8), die sich innerhalb des Auslieferungsgehäuses (2) befindet, um das Fahrrad (100) aufzunehmen und von dem Auslieferungsgehäuse (2) zu dem Lagerbereich (6) zu transportieren,
[d] mindestens eine Bilddatenerfassungsvorrichtung (10, 12, 14), um Überwachungsbilddaten des Inhalts des Auslieferungsgehäuses (2) zu erhalten, und
[e] mindestens eine Datenverarbeitungsvorrichtung (16), die funktionell verbunden ist mit der mindestens einen Bilddatenerfassungsvorrichtung, um die Überwachungsbilddaten zu analysieren, sowie mit der Handhabungsvorrichtung (8) und der Schließeinrichtung (4), wobei das Verfahren ferner die folgenden Schritte aufweist:
[f] Erhalten von Überwachungsbilddaten des Inhalts des Auslieferungsgehäuses (2) mit der mindestens einen Bilddatenerfassungsvorrichtung (10, 12, 14) und Senden der Überwachungsbilddaten an die mindestens eine Datenverarbeitungsvorrichtung (16),
[g] automatisches Vergleichen der Überwachungsbilddaten mit einem vorher festgelegten Fahrradmuster mittels der Datenverarbeitungsvorrichtung (16), um den Inhalt des Auslieferungsgehäuses (2) zu beurteilen, und
[h] Treffen einer Betriebsentscheidung des Parksystems (1) auf der Grundlage des Vergleichsschrittes,
**dadurch gekennzeichnet, dass** die Betriebsentscheidung die folgenden Schritte umfasst:
[j] bei der Schließeinrichtung (4) in offener Position, Bewegen der Schließeinrichtung (4) nur dann in die geschlossene Position, wenn die mindestens eine Datenverarbeitungsvorrichtung (16) einen ersten Konformitätszustand bestätigt, in dem
[j-i] der Inhalt des Auslieferungsgehäuses (2) ein Fahrrad (100) umfasst,
[j-ii] das Fahrrad (100) in dem Parksystem (1) abstellbar ist, und
[j-iii] sich kein Lebewesen (102) in dem Auslieferungsgehäuse (2) befindet, und
sobald die Schließeinrichtung (4) in geschlossener Stellung ist,
[k] Wiederholen der Schritte:
[f] Erhalten von Überwachungsbilddaten über den Inhalt des Auslieferungsgehäuses (2) und
[g] automatisches Vergleichen der Überwachungsbilddaten mit dem vorher festgelegten Fahrradmuster, um einen zweiten Konformitätszustand zu erhalten, und
[I] Vergleichen des ersten und des zweiten Konformitätszustands mit der mindestens einen Datenverarbeitungsvorrichtung (16), so dass,
[I-i] wenn der erste und der zweite Konformitätszustand gleich sind, die Handhabungsvorrichtung (8) betätigt wird, um das Fahrrad (100) in den Lagerbereich (6) zu transportieren, und
[l-ii] wenn der zweite Konformitätszustand von dem ersten Konformitätszustand abweicht, eine Entscheidung über eine Korrekturoperation getroffen wird.

2. Verfahren nach Anspruch 1, **dadurch gekennzeichnet, dass** das Parksystem (1) eine Benutzerbestätigungsvorrichtung umfasst, die funktionell mit der Datenverarbeitungsvorrichtung (16) verbunden ist, wobei das Verfahren ferner einen Schritt der Benutzerbestätigung mit der Benutzerbestätigungsvorrichtung umfasst, wobei der Schritt der Benutzerbestätigung vor dem Erhalt von Überwachungsbilddaten des Inhalts des Auslieferungsgehäuses (2) stattfindet.

3. Verfahren nach einem der Ansprüche 1 oder 2, **dadurch**
**gekennzeichnet, dass** die Überwachungsbilddaten des Inhalts des Auslieferungsgehäuses (2) mindestens umfassen: Größe, Form, Morphologie, Farbe, Temperatur, Volumen oder Kombinationen davon.

4. Verfahren nach einem der Ansprüche 1 bis 3, **dadurch gekennzeichnet, dass** die mindestens eine Bilddatenerfassungsvorrichtung (10, 12, 14) eine aus der Gruppe bestehend aus einer Thermografiekamera, einer 3D-Kamera und einer Kamera für sichtbares Licht oder Kombinationen davon ist.

## Revendications

1. Méthode de surveillance d'un système de stationnement automatique (1) pour le stockage d'un vélo (100), ledit système de stationnement (1) comprenant:
[a] une enceinte de livraison (2), comprenant des moyens d'ouverture et de fermeture d'accès (4), ladite enceinte de livraison (2) étant accessible par un utilisateur de système de stationnement (100) à travers ladite ouverture d'accès, pour livrer ledit vélo (100), et lesdits moyens de fermeture (4) étant mobiles entre une position ouverte et une position fermée pour fermer ladite ouverture d'accès,
[b] une zone de stockage (6), en communication avec ladite enceinte de livraison (2) pour stocker ledit vélo (100),
[c] un dispositif de manipulation (8) situé à l'intérieur de ladite enceinte de livraison (2) pour recevoir et transférer ledit vélo (100) depuis ladite enceinte de livraison (2) vers ladite zone de stockage (6),
[d] au moins un dispositif d'obtention de données d'image (10, 12, 14), pour obtenir des données d'image de surveillance du contenu de ladite enceinte de livraison (2), et
[e] au moins un dispositif de traitement de données (16) fonctionnellement associé audit au moins un dispositif d'obtention de données d'image pour l'analyse desdites données d'image de surveillance, audit dispositif de manipulation (8) et auxdits moyens de fermeture (4),
la méthode comprenant en outre les étapes suivantes:
[f] l'obtention de données d'image de surveillance du contenu de ladite enceinte de livraison (2) avec ledit au moins un dispositif d'obtention de données d'image (10, 12, 14) et l'envoi desdites données d'image de surveillance audit au moins un dispositif de traitement de données (16),
[g] la comparaison automatique desdites données d'image de surveillance à un modèle de vélo préétabli au moyen dudit dispositif de traitement de données (16) pour évaluer le contenu de ladite enceinte de livraison (2), et
[h] la prise d'une décision d'opération dudit système de stationnement (1) sur la base de ladite étape de comparaison,
**caractérisée en ce que** ladite décision d'opération comprend les étapes suivantes:
[j] avec lesdits moyens de fermeture (4) en position ouverte, le déplacement desdits moyens de fermeture (4) en position fermée uniquement lorsque ledit au moins un dispositif de traitement de données (16) confirme un premier état de conformité dans lequel
[j-i] le contenu de ladite enceinte de livraison (2) comprend un vélo (100),
[j-ii] ledit vélo (100) est stockable dans ledit système de stationnement (1), et
[j-iii] aucun être vivant (102) ne se trouve dans ladite enceinte de livraison (2), et
une fois que lesdits moyens de fermeture (4) sont en position fermée,
[k] la répétition des étapes suivantes:
[f] l'obtention de données d'image de surveillance du contenu de ladite enceinte de livraison (2) et
[g] la comparaison automatique desdites données d'image de surveillance audit modèle de vélo préétabli, pour obtenir un deuxième état de conformité, et
[l] la comparaison desdits premier et deuxième états de conformité audit au moins un dispositif de traitement de données (16) de sorte que,
[l-i] si lesdits premier et deuxième états de conformité sont identiques, ledit dispositif de manipulation (8) soit actionné pour transférer ledit vélo (100) vers ladite zone de stockage (6), et
[l-ii] si ledit deuxième état de conformité diffère dudit premier état de conformité, une décision d'opération de correction soit prise.

2. Méthode selon la revendication 1, **caractérisée en ce que** ledit système de stationnement (1) comprend un dispositif de confirmation par l'utilisateur fonctionnellement associé audit dispositif de traitement de données (16), la méthode comprenant en outre une étape de confirmation par l'utilisateur avec ledit dispositif de confirmation par l'utilisateur, ladite étape de confirmation par l'utilisateur ayant lieu avant l'obtention de données d'image de surveillance du contenu de ladite enceinte de livraison (2).

3. Méthode selon l'une quelconque des revendications 1 ou 2, **caractérisée en ce que** lesdites données d'image de surveillance du contenu de ladite enceinte de livraison (2) comprennent au moins un élément parmi: une taille, une forme, une morphologie, une couleur, une température, un volume ou des combinaisons de ceux-ci.

4. Méthode selon l'une quelconque des revendications 1 à 3, **caractérisée en ce que** ledit au moins un dispositif d'obtention de données d'image (10, 12, 14) fait partie du groupe constitué d'une caméra thermographique, d'une caméra 3D et d'une caméra à lumière visible ou de combinaisons de celles-ci.
